# FASCICULE DE BREVET EUROPEEN

(11) **EP 4 240 955 B1**
(45) Date de publication et mention de la délivrance du brevet: **11.09.2024**
(21) Numéro de dépôt: 21815236.1
(22) Date de dépôt: 03.11.2021
(51) Int. Cl.: F02K 1/04, F02K 1/80

(54) **FIXATION D'UN CÔNE D'ÉJECTION DANS UNE TUYÈRE DE TURBOMACHINE**
BEFESTIGUNG EINES ABGASKONUS IN EINER TURBOMASCHINENDÜSE
FASTENING OF AN EXHAUST CONE IN A TURBOMACHINE NOZZLE

(30) Priorité: 05.11.2020 FR 2011379
(43) Date de publication de la demande: 13.09.2023
(73) Titulaire: Safran Nacelles, 76700 Gonfreville-l'Orcher (FR); Safran Ceramics, 33185 Le Haillan (FR)
(72) Inventeur: JORET, Jean-Philippe, 77550 MOISSY-CRAMAYEL (FR); DEVANLAY, Vincent, 77550 MOISSY-CRAMAYEL (FR); BRAVIN, Fabien, 77550 MOISSY-CRAMAYEL (FR); VANDELLOS, Thomas, 77550 MOISSY-CRAMAYEL (FR)
(74) Mandataire: Ernest Gutmann - Yves Plasseraud S.A.S.
(86) Numéro de dépôt international: PCT/FR2021/051935
(87) Numéro de publication internationale: WO 2022/096821

(56) Documents cités:
- EP-A1- 2 944 776
- EP-A1- 3 018 305
- FR-A1- 2 902 838
- FR-A1- 2 914 955
- FR-A1- 3 084 916

## Description

### Domaine technique de l'invention

L'invention concerne les moyens de fixation d'un cône d'éjection dans une tuyère de turbomachine, en particulier les moyens de fixation d'un cône d'éjection en composite à matrice céramique.

### Etat de la technique antérieure

Le présent exposé concerne un ensemble situé à l'arrière (extrémité aval) d'un turboréacteur d'aéronef pour optimiser l'écoulement des gaz chauds expulsés par le turboréacteur, et possiblement absorber au moins une partie du bruit engendré par l'interaction de ces gaz chauds, issus des parties internes moteur (chambre de combustion, turbine(s)), avec l'air ambiant et avec le flux d'air froid expulsé par la soufflante du turboréacteur.

Plus précisément, le présent exposé concerne la liaison entre ce qui est souvent dénommé cône d'éjection et, située juste à l'amont, une sortie de gaz du turboréacteur.

Typiquement le cône d'éjection est complété (entouré) par une partie dite tuyère primaire. Le cône d'éjection est destiné à être positionné en aval de la partie turbine du turboréacteur, autour de laquelle la tuyère primaire est placée concentriquement. Le cône d'éjection et la tuyère primaire sont tous deux fixés sur un carter du turboréacteur par un système de fixation par des brides.

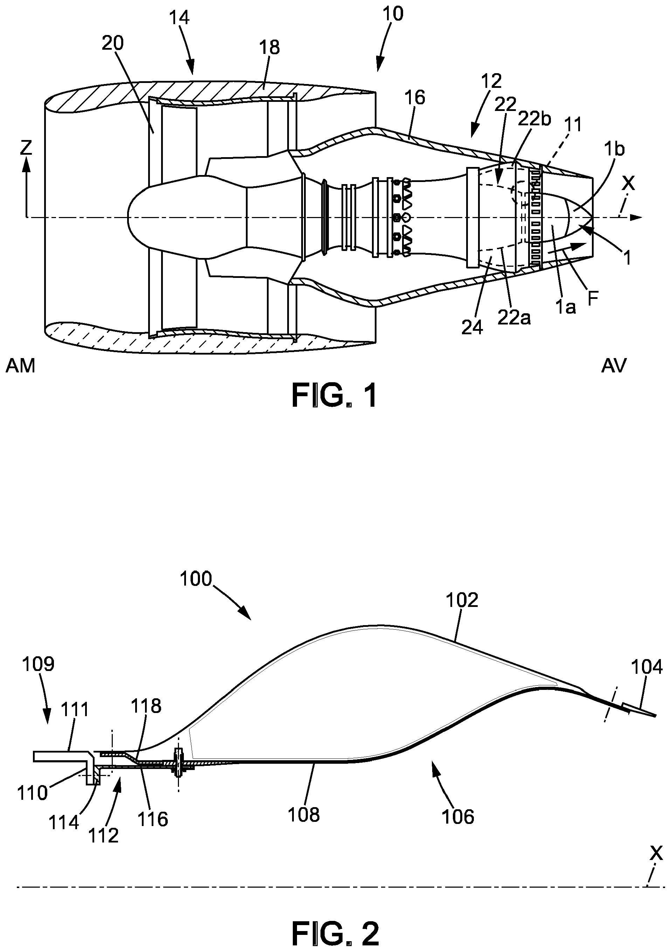

On connait un ensemble pour turboréacteur d'aéronef représenté sur la figure 1, comprenant :
- un élément central d'éjection de gaz, annulaire autour d'un axe longitudinal X et adapté pour que du gaz soit éjecté par le turboréacteur autour de lui, d'amont vers l'aval, et
- une bride de liaison interposée entre, à l'amont, une dite sortie métallique d'un turboréacteur et, à l'aval, l'élément central, pour les relier ensemble.

L'axe longitudinal X précité est l'axe longitudinal, ou axe de rotation, de la turbomachine, en particulier de la soufflante 20 et des aubes mobiles du moteur 12.

L'élément central d'éjection de gaz peut correspondre au cône d'éjection précité (repéré 1 ci-après), ou au moins à la partie amont 1a ci-après.

Un cône d'éjection classique 1 est représenté à la figure 1, sur laquelle l'amont (AM) et l'aval (AV) de la structure suivant un axe moteur (axe longitudinal X ci-avant) sont situés respectivement à gauche et à droite de la figure.

Plus généralement, un turboréacteur à gaz d'aéronef 10 est illustrée en figure 1, dont la partie centrale, formant le moteur 12 à turbine à gaz, est montée à l'intérieur d'un ensemble 14 de nacelle de moteur, comme cela est typique d'un aéronef conçu pour un fonctionnement subsonique, telle qu'un turbopropulseur ou un turboréacteur à double flux.

L'ensemble 14 de nacelle comprend généralement une nacelle de moteur 16 et un carter de soufflante 18 entourant une soufflante 20 située axialement en amont du moteur 12.

Le moteur 12 comprend, axialement en partie aval, au moins une turbine qui peut être une turbine basse pression et, encore en partie aval, un carter d'échappement 22 comprenant une virole annulaire interne 22a et une virole annulaire externe 22b délimitant entre elles une partie aval de la veine annulaire primaire 24 dans laquelle circule les gaz de combustion issus de la chambre de combustion du moteur 12.

La virole annulaire interne 22a est reliée, à son extrémité aval, au cône d'éjection 1, lequel peut comprendre une partie amont 1a, de forme sensiblement cylindrique sur les moteurs conventionnels et de forme conique divergente puis convergente sur d'autres moteurs, et une partie aval 1b de forme conique. FR 2 902 838 décrit un exemple de cône d'éjection en matériau composite. FR 3 084 916 décrit un exemple de montage d'un cône d'éjection à un carter de turbomachine.

En pratique, il reste difficile de relier ensemble la sortie métallique précitée du turboréacteur, qui peut être ladite virole annulaire interne 22a, et ledit élément central, qui peut être ladite partie amont 1a du cône d'éjection 1. En, effet, au moins une partie du cône d'éjection est réalisée dans un matériau différent du carter d'échappement, ce qui induit une dilatation différentielle des pièces en présence et la génération de contraintes thermomécaniques, issues des gradients thermiques entre ladite partie du cône d'éjection et le carter d'échappement. De plus, un caisson acoustique peut être agencé à l'intérieur du cône d'éjection pour réduire les nuisances sonores des gaz de sortie. La liaison du caisson acoustique au carter d'échappement et/ou au cône d'éjection est aussi complexe du fait de la différence de dilatation due aux matériaux et au différentiel de température entre la veine et la partie interne de la zone acoustique qui engendrent des contraintes thermomécaniques.

### Résumé de l'invention

Le présent exposé propose d'utiliser un assemblage du cône d'éjection au carter d'échappement qui soit plus fiable et plus robuste aux gradients thermiques du fait même de sa liaison à l'une et l'autre des pièces précitées.

Pour cela, le présent exposé propose un ensemble pour turbomachine d'axe longitudinal, en particulier pour une tuyère de ladite turbomachine, comprenant :
- un cône d'éjection comprenant une paroi annulaire externe d'écoulement d'un flux d'air primaire et un caisson annulaire, qui peut être un caisson annulaire acoustique, agencé radialement à l'intérieur de ladite paroi annulaire externe, le caisson annulaire comprenant une paroi annulaire interne agencée radialement à l'intérieur de la paroi annulaire externe du cône d'éjection,
- un carter d'échappement agencé en amont du cône d'éjection, et
- un organe de liaison intercalé longitudinalement entre le carter d'échappement et le cône d'éjection, l'organe de liaison étant fixé au carter d'échappement et à la paroi annulaire interne,
ledit ensemble comprenant en outre au moins un moyen élastique apte à se déformer radialement et précontraint radialement entre la paroi annulaire externe et l'organe de liaison.

En particulier, une partie aval de la paroi annulaire interne peut être fixée à une partie aval de la paroi annulaire externe.

Selon le présent document, la partie amont de la paroi annulaire externe est libre en déplacement relativement à la partie amont de la paroi annulaire interne.

Ainsi, la paroi annulaire externe est limitée en déplacement dans la direction radiale et est libre en déplacements dans la direction axiale et circonférentielle relativement à la partie amont de la paroi annulaire interne. Cet agencement permet de répartir les efforts entre les jonctions amont et aval de la paroi annulaire externe et donc de réduire l'épaisseur de la paroi annulaire externe ainsi que sa masse. De plus, les moyens élastiques empêchent la paroi annulaire externe de vibrer sur des modes d'excitation du moteur, et limite les efforts à la jonction aval de la paroi annulaire externe. De plus les moyens élastiques sont capables de s'accommoder des tolérances géométriques et de la dilatation thermique des pièces telles que l'organe de liaison ou la paroi annulaire externe, qui sont réalisés dans des matériaux différent.

Les moyens élastiques peuvent être précontraints radialement par la paroi annulaire externe contre la paroi annulaire interne au lieu de l'organe de liaison.

Dans le présent exposé, l'amont et l'aval sont définis par rapport à l'entrée et la sortie d'air de la tuyère, l'amont correspondant à l'entrée d'air et l'aval à la sortie d'air. Par ailleurs, la direction axiale correspond à la direction de l'axe de révolution de la tuyère du cône d'éjection, qui correspond à l'axe de rotation de la turbomachine, et la direction radiale est une direction perpendiculaire à l'axe de révolution.

La partie amont de la paroi annulaire externe peut être dépourvue de toutes liaisons mécaniques avec la paroi annulaire interne ou toute autre partie du cône d'éjection.

Selon un mode de réalisation, l'ensemble peut comprendre des moyens de limitation de déplacement radial de la paroi annulaire externe. Lesdits moyens de limitation de déplacement radial peuvent être intercalés, dans la direction radiale, entre la paroi annulaire externe et l'organe de liaison et forment une butée radiale de la paroi annulaire externe contre l'organe de liaison.

Les moyens de limitation de déplacement radial de la paroi annulaire externe permettent de donner un appui à la paroi annulaire externe en zone aval et évite un grand porte à faux de la paroi annulaire externe entre la zone aval et aval.

Les moyens de limitation de déplacement radial peuvent être en contact continu ou ponctuel avec l'organe de liaison.

Les moyens élastiques peuvent être fixés à la paroi annulaire externe et peuvent être en contact radial contre l'organe de liaison.

Les moyens élastiques peuvent être fixés à l'organe de liaison et peuvent être en contact radial contre la paroi annulaire externe.

Selon un mode de réalisation, au moins un, en particulier chaque moyen élastique peut être superposé à un moyen de limitation de déplacement radial. Chaque moyen élastique peut être fixé à un moyen de limitation de déplacement. Ainsi, chaque moyen élastique peut être agencé circonférentiellement à un même endroit d'un moyen de limitation de déplacement radial.

Selon un mode de réalisation, au moins un, en particulier chaque moyen élastique peut être espacé circonférentiellement d'un des moyens de limitation de déplacement radial.

Au moins un, en particulier chaque moyen élastique peut être un ressort à lame, les ressorts à lame étant distribués circonférentiellement autour de l'axe longitudinal.

Les ressorts à lame permettent de faire passer des efforts de la paroi annulaire externe selon les différents cas de vol, ultime, limite ou certain cas fatigue.

Au moins un, en particulier chaque ressort à lame peut comprendre une première lame flexible s'étendant dans un premier sens de la direction circonférentielle autour de l'axe longitudinal et une seconde lame flexible s'étendant et dans un second sens de la direction circonférentielle autour de l'axe longitudinal opposé au premier sens.

La première lame et la seconde lame peuvent s'étendre radialement vers l'intérieur depuis la paroi annulaire externe.

Au moins un, en particulier chaque ressort à lame peut comprendre une unique lame s'étendant radialement et suivant l'axe longitudinal.

Au moins un, en particulier chaque ressort à lame peut s'étendre radialement vers l'intérieur ou vers l'extérieur.

Au moins un, en particulier chaque ressort à lame peut former un moyen de limitation de déplacement radial.

Le moyen de limitation de déplacement radial peut être intégré ou rapporté au ressort à lame.

L'ensemble peut comprendre un premier joint annulaire entourant la jonction entre l'organe de liaison et la paroi annulaire interne. Ledit premier joint annulaire peut être configuré pour limiter la circulation de flux d'air primaire vers une cavité du cône d'éjection.

Le premier joint annulaire peut être agencé de sorte à couvrir axialement l'espace entre le carter d'échappement et la paroi annulaire interne.

Le premier joint annulaire peut être métallique et du type « finger seal ». Le premier joint annulaire peut comprendre une pluralité de secteurs angulaires distribués circonférentiellement autour de l'axe longitudinal et reliés entre eux de sorte à former le premier joint annulaire.

Le premier joint annulaire peut être réalisé en tungstène ou en inconel.

L'ensemble peut comprendre un second joint annulaire relié à l'organe de liaison et s'étendant radialement vers la paroi annulaire externe. Ledit second joint annulaire peut être configuré pour empêcher le flux d'air primaire de traverser la paroi annulaire externe.

Le second joint annulaire permet de réduire la recirculation du flux d'air primaire et donc de réduire l'impact sur les performances de la tuyère comprenant l'ensemble.

Le second joint annulaire peut être agencé de sorte à couvrir radialement l'espace entre le carter d'échappement et la paroi annulaire externe.

Le second joint annulaire peut être relié à l'organe de liaison et en contact avec la paroi annulaire externe.

Le second joint annulaire peut être métallique et peut comprendre une pluralité de secteurs angulaires distribués circonférentiellement autour de l'axe longitudinal et reliés entre eux de sorte à former le second joint annulaire.

Selon un mode de réalisation, les moyens élastiques peuvent être formés par un joint annulaire fixé à l'organe de liaison et comprenant une partie déformable radialement en appui contre la paroi annulaire externe.

Le joint annulaire peut être angulairement continu et peut être formé d'un seul tenant ou peut être formé par une pluralité de secteurs angulaires superposés à leurs extrémités.

Le joint annulaire peut être fixé à l'organe de liaison au niveau d'une première extrémité.

Le joint annulaire peut comprendre une seconde extrémité en appui contre la paroi annulaire interne.

Le joint annulaire peut comprendre une seconde extrémité agencée radialement vers l'extérieur par rapport à la première extrémité.

Le joint annulaire peut comprendre une protubérance s'étendant radialement vers l'extérieur située axialement entre la première extrémité et la seconde extrémité, et pouvant être en contact avec la paroi annulaire externe.

Le joint annulaire peut être métallique.

Chaque moyen de limitation de déplacement peut être formé par un tampon, les tampons étant distribués circonférentiellement autour de l'axe longitudinal et peuvent être maintenus à une distance prédéterminée avec l'organe de liaison dans la direction radiale, en particulier lorsque la paroi annulaire externe est au repos.

La distance prédéterminée peut être fonction des tolérances géométriques, de la dilatation thermique des pièces, et certains cas de vol qui peuvent être des charges et combinaisons de charges rencontrées quotidiennement ou ponctuellement.

Une partie aval de la paroi annulaire interne peut être fixée à une partie aval de la paroi annulaire externe.

L'organe de liaison comprend une bride annulaire reliée à une bride correspondante du carter d'échappement et une pluralité de pattes de fixation distribuées circonférentiellement autour de l'axe longitudinal et reliées à la paroi annulaire interne.

Les pattes de fixation peuvent être rigides, l'organe de liaison formant ainsi une bride de fixation. Alternativement, les pattes de fixation peuvent être flexibles, l'organe de liaison formant ainsi une bride de liaison souple. Les pattes de fixation flexibles permettent de reprendre la dilatation thermique entre le cône d'éjection et le carter d'échappement.

Lorsque le caisson annulaire est un caisson annulaire acoustique visant à absorber réduire les bruits de sortie d'air, celui-ci peut comprendre une pluralité de cloisons acoustiques s'étendant radialement vers l'extérieur depuis la paroi annulaire interne du caisson annulaire acoustique. Les cloisons acoustiques peuvent être métalliques.

La paroi annulaire interne ou la paroi annulaire externe peuvent être en matériau composite ou métallique.

Le cône d'éjection peut comprendre une partie aval relié à la paroi annulaire externe réalisée dans un matériau en composites à matrice céramique.

Le carter d'échappement peut être réalisé dans un matériau métallique.

Le présent exposé propose aussi une tuyère pour turbomachine comprenant un ensemble tel que précité.

### Brève description des figures

[Fig. 1] : la figure 1, déjà décrite, représente une coupe schématique de profil d'une turbomachine pour aéronef.
[Fig. 2] : la figure 2 représente une vue schématique en coupe d'une partie d'un cône d'éjection équipé d'un premier exemple de moyens élastiques.
[Fig. 3] : les figures 3a et 3b représentent une vue schématique en perspective de la partie amont d'un cône d'éjection équipé d'un deuxième exemple de moyens élastiques.
[Fig. 4] : la figure 4 représente une vue en coupe de la partie amont du cône d'éjection de la figure 3.
[Fig. 5] : la figure 5 représente une vue en coupe de la partie amont d'un cône d'éjection équipé d'un exemple de joint d'étanchéité de recirculation de flux d'air primaire.
[Fig. 6] : les figures 6a et 6b représentent une vue schématique en perspective de la partie amont d'un cône d'éjection équipé d'une variante du deuxième exemple de moyens élastiques.
[Fig. 7] : les figures 7a et 7b représentent une vue schématique en perspective de la partie amont d'un cône d'éjection équipé d'une variante du deuxième exemple de moyens élastiques.
[Fig. 8] : la figure 8a représente une vue schématique en perspective de la partie amont d'un cône d'éjection équipé d'un troisième exemple de moyens élastiques et la figure 8b représente une vue en coupe du cône d'éjection de la figure 8a.
[Fig. 9] : la figure 9 représente une vue schématique en coupe de la partie amont d'un cône d'éjection équipé d'une variante du troisième exemple de moyens élastiques.
[Fig. 10] : la figure 10 représente une vue schématique en perspective d'une partie amont d'un cône d'éjection équipé d'un quatrième exemple de moyens élastiques.

### Description détaillée de l'invention

En référence à la figure 2, le cône d'éjection 100 de tuyère comprend une paroi annulaire externe 102 d'écoulement d'un flux d'air primaire reliée à une partie aval conique 104 du cône d'éjection, par exemple par boulonnage.

Par exemple, la paroi annulaire externe 102 est métallique ou en composite à matrice céramique et la partie aval conique 104 est réalisée dans un matériau composite à matrice céramique ou métallique.

Un caisson annulaire acoustique 106 est agencé dans la paroi annulaire externe 102. Le caisson annulaire acoustique 106 comprend une paroi annulaire interne 108 agencée radialement à l'intérieur de la paroi annulaire externe 102 et une pluralité de cloisons non représentées sur la figure 2 et agencées radialement entre la paroi annulaire externe 102 et la paroi annulaire interne 108. D'autres caissons annulaires pourraient être agencés ici sans qu'ils s'agissent de caissons annulaires assurant une fonction acoustique, c'est-à-dire de réduction des bruits de sortie d'air de la turbomachine.

Par exemple, la paroi annulaire interne 108 et/ou les cloisons acoustiques peuvent être réalisées dans un matériau métallique ou composite à matrice céramique.

Le cône d'éjection 100 est relié à une bride 110 d'un carter d'échappement 109 de la tuyère portant le cône d'éjection 100. En particulier, la paroi annulaire interne 108 est reliée à la bride 110 du carter d'échappement 109 par un organe de liaison 112.

L'organe de liaison 112 comprend une bride annulaire 114 couplée à la bride 110 du carter d'échappement 109 et une pluralité de pattes de fixation 116 distribuées circonférentiellement autour d'un axe longitudinal X. Chaque patte de fixation 116 est fixée à une partie amont de la paroi annulaire interne 108. Les pattes de fixation 116 peuvent être flexibles ou rigides. L'organe de liaison 112 peut être métallique. Les pattes de fixation 116 peuvent être reliées à la paroi annulaire interne 108 par boulonnage.

La partie aval de la paroi annulaire externe 102 peut être reliée à la partie aval de la paroi annulaire interne 108 comme cela est illustré en figure 2. En revanche, la partie amont de la paroi annulaire externe 102 est libre en déplacement par rapport à la paroi annulaire interne 108. Cet agencement autorise des déformations de la partie amont de la paroi annulaire externe 102 dues aux contraintes thermomécaniques liées à la température de fonctionnement du cône d'éjection 100 et à la différence de matériaux dans le cône d'éjection 100.

De plus, une pluralité de moyens élastiques 118 sont agencés radialement entre la paroi annulaire externe 102 et l'organe de liaison 112, de sorte à être radialement précontraints par la paroi annulaire externe 102 contre la paroi annulaire interne 108 ou l'organe de liaison 112.

Les moyens élastiques 118 radialement déformable sont distribués circonférentiellement autour de l'axe longitudinal X. Par exemple, chaque moyen élastique 118 peut être formé par une lame radialement déformable s'étendant axialement depuis la paroi annulaire 102 vers la paroi annulaire interne 108 et radialement vers l'extérieur.

Les moyens élastiques 118 permettent de repartir les efforts entre la jonction amont et aval de la paroi annulaire externe 102 et donc de réduire l'épaisseur de la paroi annulaire externe 102 ainsi que sa masse. De plus, les moyens élastiques 118 améliorent le comportement vibratoire de la paroi annulaire externe 102.

La paroi annulaire externe 102 s'étend de sorte à former une continuité d'une virole 111 du carter d'échappement 109.

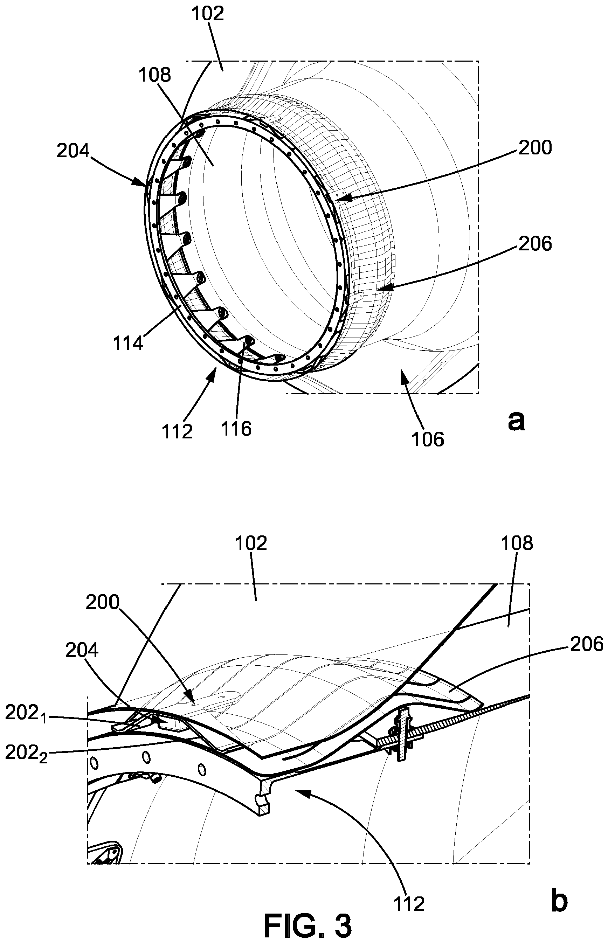

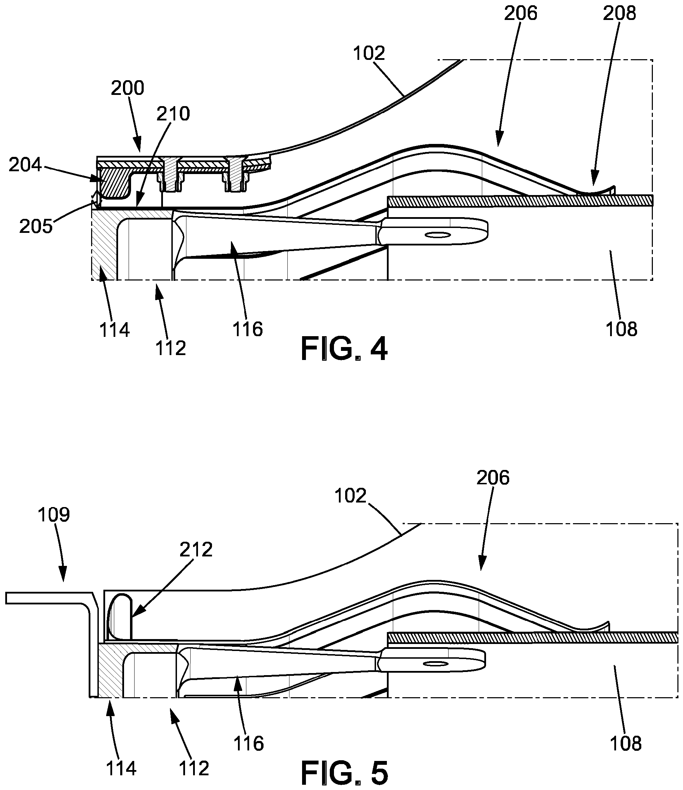

Dans l'exemple des figures 3a, 3b et 4, le cône d'éjection 100 de la figure 2 est muni des moyens élastiques 200, d'une part, fixés à la paroi annulaire externe 102, et d'autre part en appui contre la bride annulaire114 de l'organe de liaison 112. Les moyens élastiques 200 sont formés par des ressorts à lames, chacun comprenant une première lame 2021 s'étendant radialement vers l'intérieur depuis la paroi annulaire externe 102 et dans un premier sens d'une direction circonférentielle autour de l'axe longitudinal X. Chaque ressort à lames comprend une seconde lame 2022 s'étendant radialement vers l'intérieur depuis la paroi annulaire externe 102 et dans un second sens de la direction circonférentielle opposé au premier sens. Les première et seconde lames 202 sont flexibles et peuvent se déformer radialement.

Des moyens de limitation de déplacement radial 204 sous la forme de tampons 204 sont agencés radialement entre la paroi annulaire externe 102 et l'organe de liaison 112. Une distance prédéterminée 205 est maintenue radialement entre les tampons 202 et l'organe de liaison 112 de sorte à former une butée si la paroi annulaire externe 102 subit des déformations radiales importantes soit une déformation radiale supérieur à la distance prédéterminée 205. Chaque tampon 204 est fixé à un ressort à lame 200, en particulier sur une partie centrale du ressort à lame 200 entre les première et second lames 202. Les tampons 204 peuvent être rigides ou flexibles.

Les tampons 204 peuvent être assemblés aux ressorts à lame 200 ou formés d'un seul tenant avec les ressorts à lame 200.

Le cône d'éjection 100 est en outre muni d'un premier joint d'étanchéité 206 de forme annulaire autour de l'axe longitudinal X et entourant d'une part l'espace axial entre la paroi annulaire interne 108 et les espaces circonférentiels entre les pattes de fixation 116. Ainsi, le flux d'air primaire ne peut s'infiltrer à l'intérieur du cône d'éjection 100 ce qui risque de réduire les performances de la tuyère portant le cône d'éjection 100.

Le premier joint d'étanchéité 206 est réalisé dans un matériau métallique par exemple du tungstène ou de l'inconel pour résister aux températures élevées de l'air primaire.

Le premier joint d'étanchéité 206 peut être formé par une pluralité de secteurs angulaires reliés entre eux et se recouvrant en partie.

Le premier joint d'étanchéité 206 comprend une extrémité aval 208 agencée en appui contre la paroi annulaire interne 108 et une extrémité amont 210 agencée en appui contre la bride annulaire 114 de l'organe de liaison 112. L'extrémité amont 210 du premier joint d'étanchéité 206 peut être fixée directement sur la bride annulaire 114 de l'organe de liaison 112.

Les ressorts à lames 200 sont en contact avec le premier joint d'étanchéité 206.

La figure 5 représente un agencement similaire à l'agencement du cône d'éjection 100 des figures 3 et 4. A la différence, le cône d'éjection 100 de la figure 5 est muni d'un second joint d'étanchéité 212 agencé de sorte à couvrir radialement l'espace entre la bride annulaire 114 de l'organe de liaison 112 et la paroi annulaire externe 102.

La paroi annulaire externe 102 est en appui contre le second joint d'étanchéité 212. Le second joint d'étanchéité 212 peut être fixé à la bride annulaire 114 de l'organe de liaison 112 ou peut être agencé en contact contre la bride annulaire 114 de l'organe de liaison 112. Le second joint annulaire 212 est métallique et est formé par une pluralité de secteurs angulaires distribués circonférentiellement autour de l'axe longitudinal et reliés entre eux de sorte à former le second joint annulaire 212.

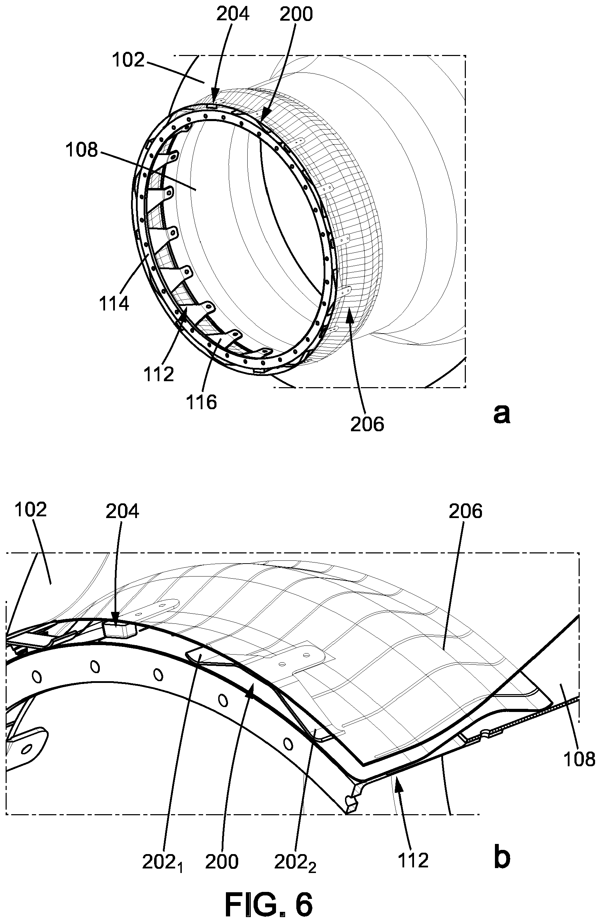

Dans la variante des figures 6a et 6b, les moyens élastiques 200 sont découplés des moyens de limitation de déplacement radial 204. Chaque moyen élastique 200 est espacé circonférentiellement par rapport à un moyen de limitation de déplacement radial 204.

Les moyens élastiques 200 et les moyens de limitation de déplacement radial 204 sont fixés directement à la paroi annulaire externe 102 et sont agencés sur une même rangée circonférentielle.

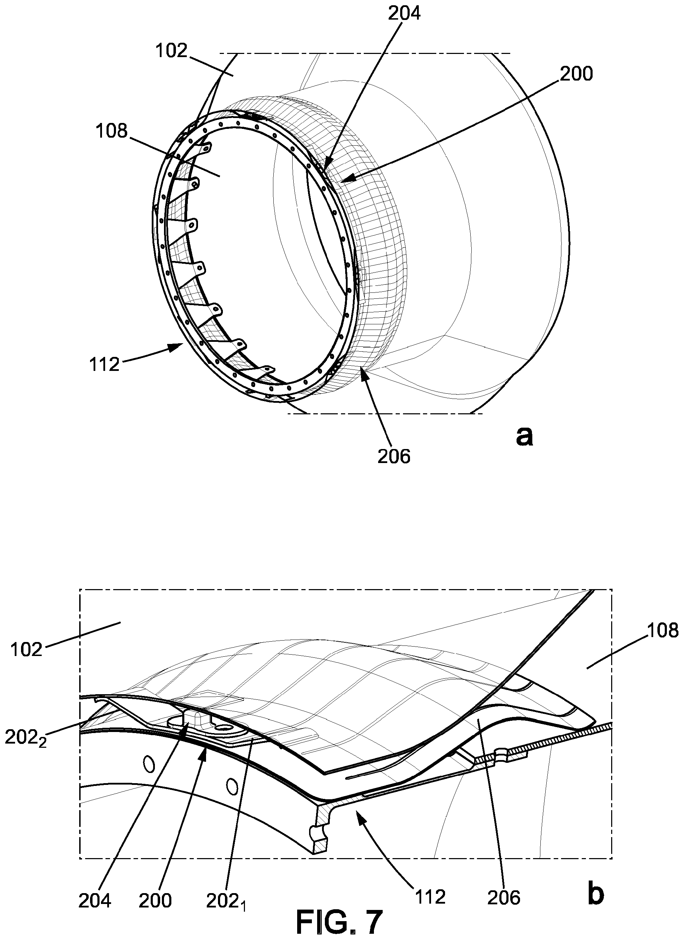

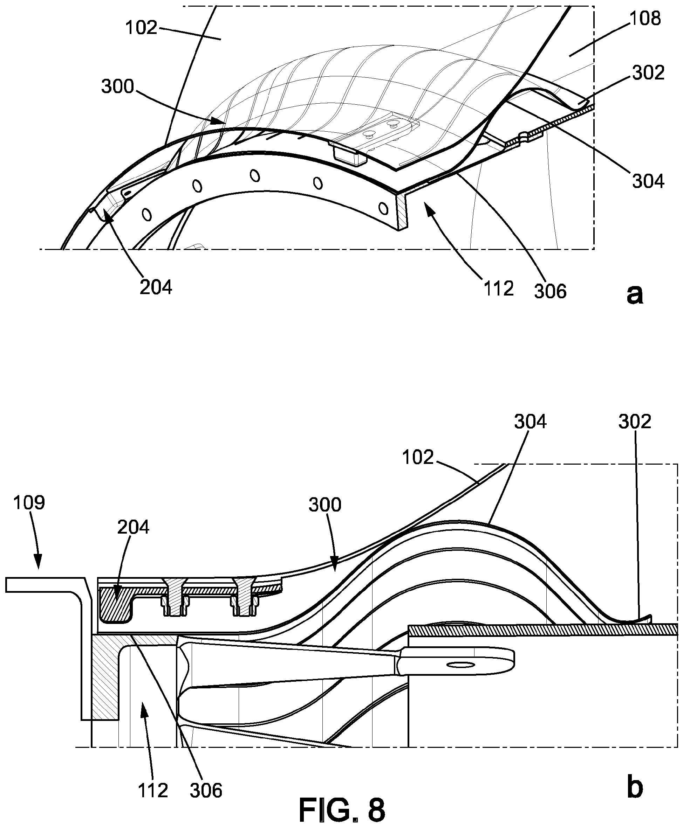

Dans la variante des figures 7a et 7b, les moyens élastiques 200 et les moyens de limitation de déplacement radial 204 sont fixés à la paroi annulaire interne 108, en particulier au premier joint d'étanchéité 206. Les moyens élastiques 200 et les moyens de limitation de déplacement radial 204 sont superposés et agencés circonférentiellement au même endroit. En référence aux figures 8a et 8b, le cône d'éjection 100 est équipé d'un unique moyen élastique annulaire 300 agencé d'une part en contact contre la paroi annulaire interne 108 et d'autre part en contact avec la paroi annulaire externe 102.

Le moyen élastique annulaire 300 présente une extrémité aval en appui contre la paroi annulaire interne 108 et une extrémité amont 306 en appui contre l'organe de liaison 112. L'extrémité amont 306 peut en outre être fixée à l'organe de liaison 112. Le moyen élastique annulaire 300 comprend une protubérance 304 s'étendant radialement vers l'extérieur. La paroi annulaire externe 102 est en appui contre la protubérance 304.

Le moyen élastique annulaire 300 peut être métallique et formé par une pluralité de secteurs angulaires reliés entre eux.

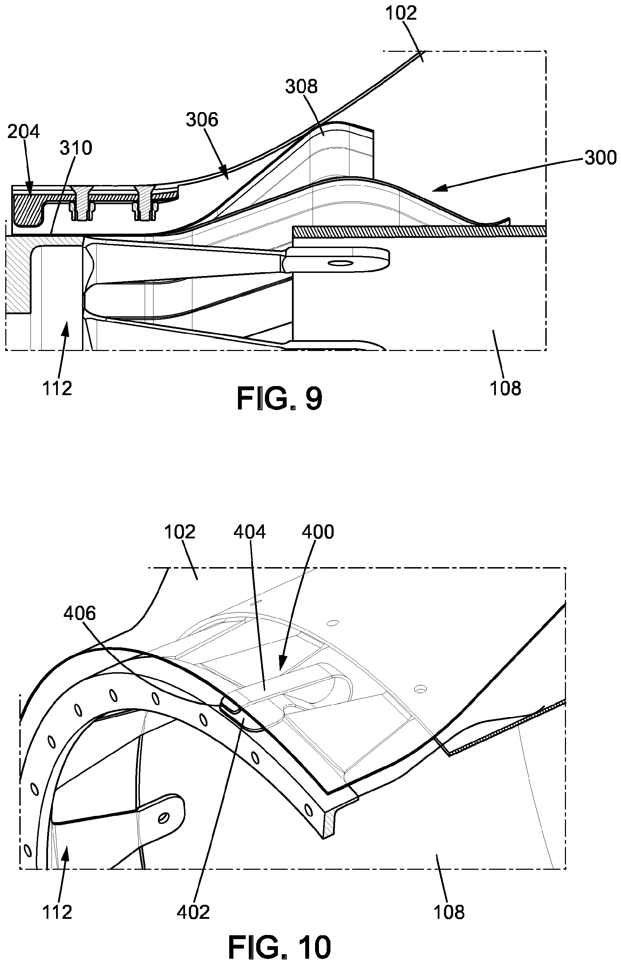

Dans la variante de la figure 9, un second joint d'étanchéité 306 annulaire est agencé autour du moyen élastique annulaire 300. Le second joint d'étanchéité 306 présente une extrémité amont 308 s'étendant radialement vers l'extérieur et vient contre la paroi annulaire externe 102. Le second joint d'étanchéité 306 présente une extrémité amont 310 en appui contre la bride 114 de l'organe de liaison 112.

Le second joint d'étanchéité 306 permet d'empêcher le flux d'air primaire de s'infiltrer à l'intérieur de la paroi annulaire interne 108.

En référence à la figure 10, le cône d'éjection est muni d'une pluralité de moyens élastiques 400 présentant une extrémité radialement interne 402 reliée à la bride annulaire 114 de l'organe de liaison 112. Les moyens élastiques 400 présentent en outre une lame 404 s'étendant longitudinalement et est agencé radialement à distance de l'extrémité radialement interne 402.

Les moyens élastiques 400 forment en outre des moyens de limitation de déplacement radial à travers l'extrémité radialement externe 406. Cette extrémité radialement externe 406 présente un rebord s'étendant radialement vers l'intérieur.

Le cône d'éjection peut comprendre en plus des moyens élastiques 400, des moyens de limitation de déplacement radial tels que les moyens de limitation de déplacement radial 204.

## Revendications

1. Ensemble pour turbomachine d'axe longitudinal (X) comprenant :
- un cône d'éjection (100) comprenant une paroi annulaire externe (102) d'écoulement d'un flux d'air primaire et un caisson annulaire (106) agencé radialement à l'intérieur de ladite paroi annulaire externe, le caisson annulaire comprenant une paroi annulaire interne (108) agencée radialement à l'intérieur de la paroi annulaire externe du cône d'éjection,
- un carter d'échappement (109) agencé en amont du cône d'éjection, et
- un organe de liaison (112) intercalé longitudinalement entre le carter d'échappement et le cône d'éjection, l'organe de liaison étant fixé au carter d'échappement et à la paroi annulaire interne,
ledit ensemble comprenant en outre au moins un moyen élastique (118,200,300,400) apte à se déformer radialement et précontraint radialement entre la paroi annulaire externe et l'organe de liaison, et
**caractérisé en ce que** l'organe de liaison comprend une bride annulaire reliée à une bride correspondante du carter d'échappement et une pluralité de pattes de fixation distribuées circonférentiellement autour de l'axe longitudinal et reliées à la paroi annulaire interne.

2. Ensemble selon la revendication 1, comprenant des moyens de limitation de déplacement radial (204) de la paroi annulaire externe (102), lesdits moyens de limitation de déplacement radial étant intercalés entre la paroi annulaire externe et l'organe de liaison (112), lesdits moyens de limitation de déplacement radial forment une butée radiale de la paroi annulaire externe contre l'organe de liaison.

3. Ensemble selon la revendication 1 ou 2, dans lequel les moyens élastiques (200) sont fixés à la paroi annulaire externe (102) et sont en contact radial contre l'organe de liaison (112) ou fixés à l'organe de liaison (112) et sont en contact radial contre la paroi annulaire externe (102).

4. Ensemble selon la revendication 2 et la revendication 3, dans lequel les moyens de limitation de déplacement radial (204) sont fixés à la paroi annulaire externe (102) et sont en contact radial contre l'organe de liaison (112) ou fixés à l'organe de liaison (112) et sont en contact radial contre la paroi annulaire externe (102).

5. Ensemble selon l'une des revendications 2 à 4, dans lequel au moins un moyen élastique (118,200,300) est superposé à un moyen de limitation de déplacement radial (204).

6. Ensemble selon l'une des revendications 2 à 4, dans lequel au moins un moyen élastique (118,200,300) est espacé circonférentiellement d'un des moyens de limitation de déplacement radial (204).

7. Ensemble selon l'une des revendications 1 à 6, dans lequel au moins un moyen élastique (118,200,400) est un ressort à lame, les ressorts à lame étant distribués circonférentiellement autour de l'axe longitudinal.

8. Ensemble selon la revendication 7, dans lequel au moins un desdits ressorts (200) à lame comprend une première lame flexible (2021) s'étendant dans un premier sens de la direction circonférentielle autour de l'axe longitudinal et une seconde lame flexible (2022) s'étendant dans un second sens de la direction circonférentielle autour de l'axe longitudinal (X) opposé au premier sens.

9. Ensemble selon la revendication 7, dans lequel au moins un desdits ressorts à lame (400) comprend une unique lame (404) s'étendant radialement et suivant l'axe longitudinal (X).

10. Ensemble selon la revendication 9, dans lequel au moins un desdits ressorts à lame (400) forme un moyen de limitation de déplacement radial.

11. Ensemble selon l'une des revendications 1 à 10, comprenant un premier joint annulaire (206) entourant la jonction entre l'organe de liaison (112) et la paroi annulaire interne (108), ledit premier joint annulaire (206) étant configuré pour limiter la circulation de flux d'air primaire vers une cavité du cône d'éjection.

12. Ensemble selon l'une des revendications 1 à 11, comprenant un second joint annulaire (212) relié à l'organe de liaison (112) et s'étendant radialement vers la paroi annulaire externe (102), ledit second joint annulaire (212) étant configuré pour empêcher le flux d'air primaire de traverser la paroi annulaire externe (102).

13. Ensemble selon l'une des revendications 1 à 6, dans lequel les moyens élastiques (300) sont formés par un joint annulaire fixé à l'organe de liaison (112) et comprenant une partie déformable radialement en appui contre la paroi annulaire externe (102).

14. Ensemble selon l'une des revendications 2 à 13, dans lequel chaque moyen de limitation de déplacement (204) est formé par un tampon, les tampons étant distribués circonférentiellement autour de l'axe longitudinal (X) et sont maintenus à une distance prédéterminée avec l'organe de liaison (112) dans la direction radiale.

15. Ensemble selon l'une des revendications 1 à 14, dans lequel une partie aval de la paroi annulaire externe (102) est fixée à une partie aval de la paroi annulaire interne (108).

16. Tuyère de turbomachine comprenant un ensemble selon l'une des revendications précédentes.

## Patentansprüche

1. Anordnung für eine Turbomaschine bzw. ein Turbotriebwerk mit einer Längsachse (X), enthaltend:
- einen Ausstoßkonus (100) mit einer äußeren Ringwand (102) für die Strömung eines Primärluftstroms und einem ringförmigen Kasten (106), der radial innerhalb der äußeren Ringwand angeordnet ist, wobei der ringförmige Kasten eine innere Ringwand (108) aufweist, die radial innerhalb der äußeren Ringwand des Ausstoßkonus angeordnet ist,
- ein Austrittsgehäuse (109), das dem Ausstoßkonus vorgelagert ist, und
- ein Verbindungsglied (112), das in Längsrichtung zwischen dem Austrittsgehäuse und dem Ausstoßkonus angeordnet ist, wobei das Verbindungsglied an das Austrittsgehäuse und an die innere Ringwand befestigt ist,
wobei die Anordnung ferner zumindest ein elastisches Mittel (118, 200, 300, 400) umfasst, das sich radial verformen kann und zwischen der äußeren Ringwand und dem Verbindungsglied radial vorgespannt ist,
**dadurch gekennzeichnet, dass** das Verbindungsglied einen ringförmigen Flansch, der mit einem entsprechenden Flansch des Austrittsgehäuses verbunden ist, und eine Vielzahl von Befestigungslaschen umfasst, die in Umfangsrichtung um die Längsachse verteilt angeordnet und mit der inneren Ringwand verbunden sind.

2. Anordnung nach Anspruch 1,
enthaltend Mittel zur Begrenzung der radialen Verschiebung (204) der äußeren Ringwand (102), wobei die Mittel zur Begrenzung der radialen Verschiebung zwischen der äußeren Ringwand und dem Verbindungsglied (112) eingefügt sind, wobei die Mittel zur Begrenzung der radialen Verschiebung einen radialen Anschlag an das Verbindungsglied für die äußere Ringwand bilden.

3. Anordnung nach Anspruch 1 oder 2,
wobei die elastischen Mittel (200) an die äußere Ringwand (102) befestigt sind und radial an dem Verbindungsglied (112) anliegen oder an das Verbindungsglied (112) befestigt sind und radial an der äußeren Ringwand (102) anliegen.

4. Anordnung nach Anspruch 2 oder Anspruch 3,
wobei die Mittel zur Begrenzung der radialen Verschiebung (204) an die äußere Ringwand (102) befestigt sind und radial an dem Verbindungsglied (112) anliegen oder an das Verbindungsglied (112) befestigt sind und radial an der äußeren Ringwand (102) anliegen.

5. Anordnung nach einem der Ansprüche 2 bis 4,
wobei zumindest ein elastisches Mittel (118, 200, 300) einem Mittel zur Begrenzung der radialen Verschiebung (204) überlagert ist.

6. Anordnung nach einem der Ansprüche 2 bis 4,
wobei zumindest ein elastisches Mittel (118, 200, 300) in Umfangsrichtung von einem der Mittel zur Begrenzung der radialen Verschiebung (204) beabstandet ist.

7. Anordnung nach einem der Ansprüche 1 bis 6,
wobei zumindest ein elastisches Mittel (118, 200, 400) eine Blattfeder ist, wobei die Blattfedern in Umfangsrichtung um die Längsachse verteilt angeordnet sind.

8. Anordnung nach Anspruch 7,
wobei zumindest eine der Blattfedern (200) ein erstes Federblatt (2021), das sich in einer ersten Richtung der Umfangsrichtung um die Längsachse erstreckt, und ein zweites Federblatt (2022), das sich in einer zweiten Richtung der Umfangsrichtung um die Längsachse (X) entgegengesetzt zur ersten Richtung erstreckt, umfasst.

9. Anordnung nach Anspruch 7,
wobei zumindest eine der Blattfedern (400) ein einzelnes Federblatt (404) umfasst, das sich radial und entlang der Längsachse (X) erstreckt.

10. Anordnung nach Anspruch 9,
wobei zumindest eine der Blattfedern (400) ein Mittel zur Begrenzung der radialen Verschiebung bildet.

11. Anordnung nach einem der Ansprüche 1 bis 10,
enthaltend eine erste Ringdichtung (206), die die Verbindung zwischen dem Verbindungsglied (112) und der inneren Ringwand (108) umgibt, wobei die erste Ringdichtung (206) dazu ausgelegt ist, die Strömung des Primärluftstroms zu einem Hohlraum des Ausstoßkonus begrenzt.

12. Anordnung nach einem der Ansprüche 1 bis 11,
enthaltend eine zweite Ringdichtung (212), die mit dem Verbindungsglied (112) verbunden ist und sich radial zur äußeren Ringwand (102) hin erstreckt, wobei die zweite Ringdichtung (212) dazu ausgelegt ist, zu verhindern, dass der Primärluftstrom durch die äußere Ringwand (102) strömt.

13. Anordnung nach einem der Ansprüche 1 bis 6,
wobei die elastischen Mittel (300) aus einer Ringdichtung gebildet sind, die an das Verbindungsglied (112) befestigt ist und einen radial verformbaren Abschnitt aufweist, der an der äußeren Ringwand (102) anliegt.

14. Anordnung nach einem der Ansprüche 2 bis 13,
wobei jedes Mittel zur Begrenzung der Verschiebung (204) aus einem Puffer gebildet ist, wobei die Puffer in Umfangsrichtung um die Längsachse (X) verteilt angeordnet sind und in radialer Richtung in einem vorbestimmten Abstand zu dem Verbindungsglied (112) gehalten werden.

15. Anordnung nach einem der Ansprüche 1 bis 14,
wobei ein stromabwärtiger Abschnitt der äußeren Ringwand (102) an einen stromabwärtigen Abschnitt der inneren Ringwand (108) befestigt ist.

16. Düse einer Turbomaschine bzw. eines Turbotriebwerks mit einer Anordnung nach einem der vorhergehenden Ansprüche.

## Claims

1. An assembly for a turbomachine with a longitudinal axis (X) comprising:
- an exhaust cone (100) comprising an outer annular wall (102) for the flow of a primary air flow and an annular box (106) arranged radially inside said outer annular wall, the annular box comprising an inner annular wall (108) arranged radially inside the outer annular wall of the exhaust cone,
- an exhaust case (109) arranged upstream of the exhaust cone, and
- a connecting member (112) interposed longitudinally between the exhaust case and the exhaust cone, the connecting member being fastened to the exhaust case and to the inner annular wall,
said assembly further comprising at least one elastic means (118, 200, 300, 400) radially deformable and radially prestressed between the outer annular wall and the connecting member, and
**characterized in that** the connecting member comprises an annular flange connected to a corresponding flange of the exhaust case and a plurality of fastening lugs distributed circumferentially around the longitudinal axis and connected to the inner annular wall.

2. The assembly according to claim 1, comprising means (204) for limiting a radial displacement of the outer annular wall (102), said radial displacement limiting means being interposed between the outer annular wall and the connecting member (112), said radial displacement limiting means form a radial stop of the outer annular wall against the connecting member.

3. The assembly according to claim 1 or 2, wherein the elastic means (200) are fastened to the outer annular wall (102) and are in radial contact against the connecting member (112) or fastened to the connecting member (112) and are in radial contact against the outer annular wall (102).

4. The assembly according to claim 2 and to claim 3, wherein the radial displacement limiting means (204) are fastened to the outer annular wall (102) and are in radial contact against the connecting member (112) or fastened to the connecting member (112) and are in radial contact against the outer annular wall (102).

5. The assembly according to one of claims 2 to 4, wherein at least one elastic means (118, 200, 300) is superimposed with a radial displacement limiting means (204) .

6. The assembly according to one of claims 2 to 4, wherein at least one elastic means (118, 200, 300) is circumferentially spaced apart from one of the radial displacement limiting means (204).

7. The assembly according to one of claims 1 to 6, wherein at least one elastic means (118, 200, 400) is a leaf spring, the leaf springs being distributed circumferentially around the longitudinal axis.

8. The assembly according to claim 7, wherein at least one of said leaf springs (200) comprises a first flexible leaf (2021) extending in a first direction of the circumferential direction around the longitudinal axis and a second flexible leaf (2022) extending in a second direction of the circumferential direction around the longitudinal axis (X) opposite to the first direction.

9. The assembly according to claim 7, wherein at least one of said leaf springs (400) comprises one single leaf (404) extending radially along the longitudinal axis (X).

10. The assembly according to claim 9, wherein at least one of said leaf springs (400) forms a radial displacement limiting means.

11. The assembly according to one of claims 1 to 10, comprising a first annular seal (206) surrounding the junction between the connecting member (112) and the inner annular wall (108), said first annular seal (206) being configured to limit the circulation of the primary air flow towards a cavity of the exhaust cone.

12. The assembly according to one of claims 1 to 11, comprising a second annular seal (212) connected to the connecting member (112) and extending radially towards the outer annular wall (102), said second annular seal (212) being configured to prevent the primary air flow from passing through the outer annular wall (102).

13. The assembly according to one of claims 1 to 6, in which the elastic means (300) are formed by an annular seal fastened to the connecting member (112) and comprising a radially deformable part bearing against the outer annular wall (102).

14. The assembly according to one of claims 2 to 13, wherein each displacement limiting means (204) is formed by a buffer, the buffers being distributed circumferentially around the longitudinal axis (X) and are held at a predetermined distance with the connecting member (112) in the radial direction.

15. The assembly according to one of claims 1 to 14, wherein a downstream portion of the outer annular wall (102) is fastened to a downstream portion of the inner annular wall (108).

16. A turbomachine nozzle comprising an assembly according to one of the preceding claims.
